# EUROPEAN PATENT APPLICATION

(11) **EP 4 714 880 A1**
(43) Date of publication of application: **25.03.2026**
(21) Application number: 25181976.9
(22) Date of filing: 11.06.2025
(51) Int. Cl.: B65H 23/025, B32B 37/00, B65H 39/16, H01M 4/04, B65H 27/00, H01M 10/04

(54) **LAMINATION TAPE FEEDING SYSTEM FOR AN ELECTRODE PLATE SUBSTRATE**

(30) Priority: 21.06.2024 KR 20240081393
(71) Applicant: SAMSUNG SDI CO., LTD., Yongin-si, Gyeonggi-do 17084 (KR)
(72) Inventor: SHIN, Ho Sik, 17084 Yongin-si (KR); MOON, Sanghyup, 17084 Yongin-si (KR)
(74) Representative: Marks & Clerk LLP

(57) **Abstract**

A lamination tape feeding system for an electrode plate substrate is provided. The lamination tape feeding system includes an input roll configured to input a lamination tape to be attached to an uncoated region of the electrode plate substrate to which an active material is applied, a plurality of guide rolls configured to guide the lamination tape, a discharge roll configured to discharge the lamination tape. The system also includes at least one crown roll that is disposed in a path of the lamination tape between the input roll and the discharge roll, disposed in the path between the guide rolls, and has a maximum height at the center of a width direction that intersects the moving direction of the lamination tape, with the height decreasing toward ends the at least one crown roll.

## Description

### BACKGROUND OF THE DISCLOSURE

### (a) Field of the Disclosure

The present disclosure relates to a lamination tape feeding system for an electrode plate substrate used in an electrode plate of a rechargeable battery.

### (b) Description of the Related Art

As is known secondary batteries are rechargeable batteries that can be repeatedly charged and discharged. Small-capacity secondary batteries are used in small, portable electronic devices such as mobile phones, laptop computers, and camcorders. High-capacity and high-density secondary batteries are used as power sources for driving motors in hybrid and electric vehicles or for energy storage.

A secondary battery includes an electrode assembly for charging and discharging current, a case or pouch accommodating the electrode assembly and an electrolyte, and an electrode terminal connected to the electrode assembly and drawn out of the case or pouch. The electrode assembly may be formed as a jelly-roll type, which is formed by winding an electrode and a separator, or as a stack type, which is formed by stacking the electrode and the separator.

In the process of manufacturing a rechargeable battery electrode, a low-adhesion lamination tape is supplied for attachment to a positive electrode plate. When attaching the lamination tape to the electrode plate, the adhesion of the lamination tape is greater than that of general tape before heat fusing. Therefore, when feeding the lamination tape, the flow, e.g., shifting, of the lamination tape in all directions is intensified. The flow may cause wrinkles to be formed in the lamination tape.

The lamination tape is folded in a specific section inside a lamination tape feeder. As the folding of the lamination tape becomes greater, the supply path, supply angle, and adhesive direction in a lamination tape feeding system are affected.

### SUMMARY OF THE DISCLOSURE

The present disclosure provides a lamination tape feeding system for an electrode plate substrate, with the system being capable of preventing wrinkling of the lamination tape when the lamination tape is fed for attachment to the electrode plate substrate by suppressing width-direction flow of the lamination tape.

A lamination tape feeding system for an electrode plate substrate according to an embodiment includes an input roll configured to input a lamination tape to be attached to an uncoated region of the electrode plate substrate to which an active material is applied, a plurality of guide rolls configured to guide the lamination tape input (e.g. the lamination tape), a discharge roll configured to discharge the lamination tape, and at least one crown roll (i) disposed in a path of the lamination tape between the input roll and the discharge roll, (ii) disposed in the path between the guide rolls, and (iii) having a maximum height at the center of the width direction that intersects the moving direction of the lamination tape along the path, with the height decreasing from the maximum height toward ends of the at least one crown roll.

The input roll may be disposed to guide the lamination tape downward and then upward, and the discharge roll may be disposed to horizontally guide the lamination tape.

Each of the guide rolls and a plurality of crown rolls may be provided, and the guide rolls and the crown rolls may be alternately disposed in sections along the moving direction of the lamination tape.

A plurality of crown rolls may be provided and may be sequentially disposed in the moving direction of the lamination tape.

A plurality of the crown rolls may be provided and may be disposed along the moving direction of the lamination tape.

The at least one crown roll may include peaks and troughs along a circumferential direction of the at least one crown roll, and the peaks and troughs may be repeatedly disposed along the width direction (e.g. the width direction of the at least one roll).

The crown roll may further include a resin coating layer on the peaks.

The crown roll may further include a fluorine resin coating layer on the peaks.

The fluorine resin coating layer may be formed of one of fluorinated ethylene propylene (FEP) and polyphenylene ether (PPE).

The total surface area of the peaks configured to contact the lamination tape may be 30 to 60% of the total surface (e.g. the total surface area) of the crown roll.

The at least one crown roll may include peaks and troughs that are sequentially disposed in a sloped direction with respect to a circumferential direction of the at least one crown rolls, and the peaks and troughs are repeatedly disposed along the width direction of the at least one crown roll.

The at least one crown roll may include a first slope roll and a second slope roll that are sequentially arranged in the moving direction of the lamination tape, and the first slope direction of the first slope roll and the second slope direction of the second slope roll are symmetrical with respect to the moving direction of the lamination tape.

The at least one crown roll includes a plurality of protruding parts intermittently spaced along a circumferential direction of the at least one crown roll and may have a bottom spaced from the protruding parts, and the protruding parts may be repeatedly disposed along the width direction of the at least one crown roll.

The protruding parts may be intermittently disposed along a slope direction with respect to the circumferential direction of the at least one crown roll.

The at least one crown roll may further include a resin coating layer on a surface of the at least one crown roll.

The coating layer may be sequentially formed along the circumferential direction of the at least one crown roll, and the coating layer may have a plurality of parts and gaps formed between the parts of the coating layer in the width direction of the at least one crown roll.

The coating layer may be sequentially formed along a slope direction with respect to the circumferential direction of the at least one crown roll, and the coating layer may have a plurality of parts and gaps formed between the parts of the coating layer in the width direction of the at least one crown roll.

The coating layer may include intermittently spaced parts along the circumferential direction of the roll, and the parts of the coating layer may be repeatedly disposed along the width direction of the at least one crown roll.

The coating layer may include intermittently spaced parts formed along a slope direction with respect to the circumferential direction of the at least one crown roll, and the intermittently spaced parts may be repeatedly disposed along the width direction of the at least one crown roll.

At least some of the above and other features of the invention are set out in the claims.

As such, an embodiment of the present disclosure uses a crown roll to transport a lamination tape to be attached to an electrode plate substrate, thereby suppressing the width-direction flow of the lamination tape. Therefore, wrinkling of the lamination tape can be prevented when feeding the lamination tape to be attached to the electrode plate substrate.

### BRIEF DESCRIPTION OF THE DRAWINGS

FIG. 1 is a schematic diagram of a lamination tape feeding system for an electrode plate substrate according to a first embodiment of the present disclosure.
FIG. 2 is a cross-sectional view of an electrode plate substrate to which a lamination tape is attached by the system of FIG. 1.
FIG. 3 is a top plan view of the electrode plate substrate to which the lamination tape of FIG. 2 is attached.
FIG. 4 is a cross-sectional view of a winding-type electrode assembly using the electrode plate substrates of FIGS. 2 and 3.
FIG. 5 is a front view of the crown roll applied to FIG. 1.
FIG. 6 is a partial top plan view of the crown roll of FIG. 5.
FIG. 7 is a cross-sectional view taken along line VII-VII of FIG. 5.
FIG. 8 is a partial top plan view of a crown roll applied to a lamination tape feeding system for an electrode plate substrate according to a second embodiment of the present disclosure.
FIG. 9 is a top plan view showing the pattern of a first slope direction of a first slope roll and a second slope direction of a second slope roll when the two crown rolls of FIG. 8, the first slope roll and the second slope roll, are sequentially disposed.
FIG. 10 is a partial top plan view of a crown roll applied to a lamination tape feeding system for an electrode plate substrate according to a third embodiment of the present disclosure.
FIG. 11 is a partial top plan view of a crown roll applied to a lamination tape feeding system for an electrode plate substrate according to a fourth embodiment of the present disclosure.

### DETAILED DESCRIPTION OF THE EMBODIMENTS

The present disclosure will be described in detail hereinafter with reference to the accompanying drawings in which embodiments of the present disclosure are shown. As those skilled in the art will understand, the described embodiments may be modified in various different ways without departing from the scope of the present disclosure. The drawings and description are to be regarded as illustrative in nature and not restrictive, and like reference numerals designate like elements throughout the disclosure.

Although terms "first," "second," and the like are used to explain various constituent elements, the constituent elements are not limited to such terms. These terms are only used to distinguish one constituent element from another constituent element.

It is to be understood that when one component is referred to as being "connected" or "coupled" to another component, it may be connected or coupled directly to another component or there may be other intervening components. On the other hand, it is to be understood that when one component is referred to as being "connected" or "coupled directly" to another component, there are no other intervening components.

Throughout the specification, the terms "comprise" and "have" are intended to specify the presence of stated features, integers, steps, operations, constituent elements, components or a combination thereof, but do not preclude the presence or addition of one or more other features, integers, steps, operations, constituent elements, components, and/or groups thereof. Therefore, unless explicitly stated to the contrary, the word "comprise" and variations such as "comprises" and "comprising" should be understood to imply the inclusion of stated elements but not the exclusion of any other elements.

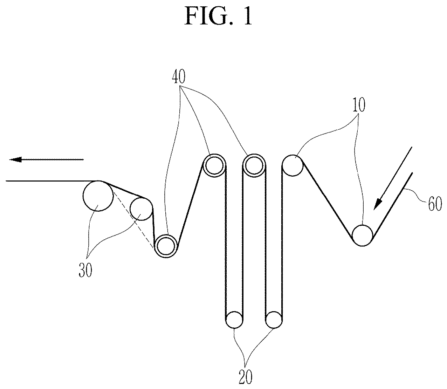

FIG. 1 is a schematic diagram of a lamination tape feeding system for an electrode plate substrate according to a first embodiment of the present disclosure. Referring to FIG. 1, the lamination tape feeding system of the first embodiment includes an input roll 10 for driving a lamination tape 60, guide rolls 20, a discharge roll 30, and a crown roll 40.

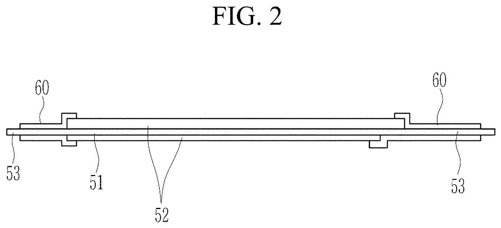

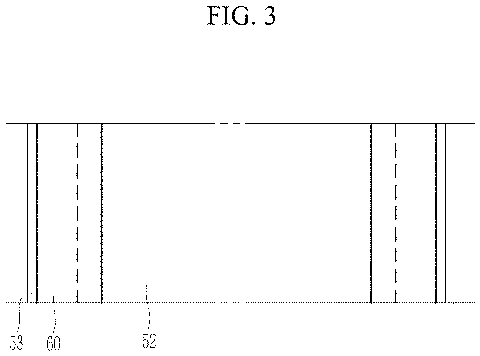

FIG. 2 is a cross-sectional view of an electrode plate substrate to which a lamination tape is attached by the system of FIG. 1, and FIG. 3 is a top plan view of the electrode plate substrate to which the lamination tape of FIG. 2 is attached. The lamination tape feeding system is used in a process of feeding a lamination tape to attach a low-adhesion lamination tape to a positive electrode plate in processes for manufacturing an electrode of a rechargeable battery.

The lamination tape feeding system feeds the lamination tape 60 to be attached to an active material coating part 52 and an uncoated region 53 of an electrode plate substrate 51. The electrode plate substrate 51 may be, for example, a positive electrode substrate. The active material coating part 52 is provided on at least one surface of the positive electrode substrate 51. In the first embodiment, the active material coating part 52 is provided on both side surfaces of the positive electrode substrate 51.

The uncoated region 53 is formed as an exposed region of the positive electrode substrate 51 at sides of the active material coating part 52. The uncoated region 53 may be provided on both sides in the width direction of the positive electrode substrate 51. The lamination tape 60 is attached and connected from an end of the active material coating part 52 to the uncoated region 53.

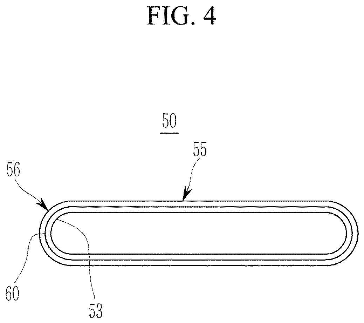

FIG. 4 is a cross-sectional view of a winding-type electrode assembly using the electrode plate substrate of FIGS. 2 and 3. Referring to FIGS. 2 and 4, a pouch-shaped electrode assembly 50 includes the positive electrode substrate 51, a separator (not shown), and a negative electrode substrate (not shown), and is formed by stacking and winding the substrates and separator. The pouch-shaped electrode assembly 50 is wound into a cylindrical shape and then flattened by applying pressure, thereby having a flat part 55 and a curved part 56 at both ends of the flat part 55.

The lamination tape 60 is disposed on the curved part 56 of the electrode assembly 50 where cracks are likely to occur in the active material. More specifically, the lamination tape 60 covers the end of the active material coating part 52 and is attached to the uncoated region 53. Thus, while the active material coating part 52 disposed on the curved part 56 is at a greater risk of cracking than the flat part 55, the end of the active material coating part 52 is protected by being covered with the lamination tape 60.

Referring again to FIG. 1, the input roll 10 is configured to input the lamination tape 60 to be attached to the uncoated region 53 of the positive electrode substrate 51 to which the active material is applied. The guide rolls 20 are configured to guide the feeding of the input lamination tape 60.

The discharge roll 30 is configured to discharge the lamination tape 60 guided by the guide rolls 20 to attach the lamination tape 60 to the positive electrode substrate 51. The input roll 10, the guide rolls 20, and the discharge roll 30 may be formed as cylindrical flat rolls to move and guide the lamination tape 60 in the moving direction.

The input roll 10, guide rolls 20, and crown rolls 40 are disposed to guide the lamination tape 60 downward and then upward. The discharge roll 30 is disposed to guide the rising lamination tape 60 in a horizontal direction. Since the input roll 10 and the discharge roll 30 are installed to guide the lamination tape 60 downward and then upward in the height direction, the overall height of the system may be reduced.

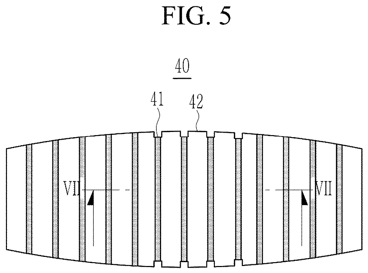

FIG. 5 is a front view of the crown roll as used in the feeding system shown in FIG. 1. Referring to FIG. 1 and FIG. 5, crown rolls 40 are disposed between the input roll 10 and the discharge roll 30 and disposed between the guide rolls 20. The crow rolls 40 provide a maximum height at the center of the width direction (left-right direction in FIG. 5) intersecting the moving direction (up-down direction in FIG. 5) of the lamination tape 60, with the height gradually decreasing toward both ends of the system.

At least one crown roll 40 is provided in embodiments of the disclosure, and an appropriate number of crown rolls 40 may be used depending on the length of the path along which the lamination tape 60 moves. In the embodiment depicted in FIG. 1, three crown rolls 40 are used to effectively prevent the width-direction flow of the lamination tape 60.

Specifically, the guide rolls 20 and crown rolls 40 are provided in plurality and are alternately disposed in sections along the moving direction of the lamination tape 60 to move the lamination tape 60 upward and downward. Therefore, the length of the entire system may be reduced.

In addition, the crown rolls 40 are provided in plurality to be sequentially disposed in sections along the moving direction. As such, the width-direction flow of the lamination tape 60 may be sequentially prevented in the sections with the crown rolls 40. Note that the "width-direction flow" in embodiments of the disclosure refers to the direction perpendicular to the direction that the lamination tape 60 moves through the feeding system. In FIG. 1, the width-direction flow is into and out of the page.

In example embodiments, two crown rolls 40 are sequentially disposed on the upper side of the system immediately before the discharge roll 30 to move the lamination tape 60 downward and then upward while preventing the lamination tape 60 from flowing in the width direction. The lamination tape 60, which is prevented from flowing in the width direction, may be stably fed to the end of the active material coating part 52 of the positive electrode substrate 51 and the uncoated region 53.

A plurality of the crown rolls 40 may be provided and alternately disposed with the guide rolls 20 in sections along the moving direction of the lamination tape 60. As such, the width-direction flow of the lamination tape 60 may be prevented in some sections by the crown rolls 40, and the width-direction flow of the lamination tape 60may also be prevented by the guide rolls 20.

The crown rolls 40 may be disposed on the upper side of the system between the input roll 10 and the discharge roll 30 and may be connected to the guide roll 20 on the lower side to move the rising laminating tape 60 downward while also preventing the width-direction flow of the lamination tape 60. In this case, the lamination tape 60 without width-direction flow may be fed to the discharge roll 30 side.

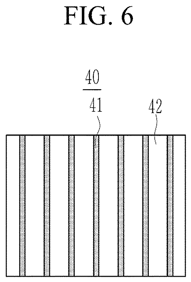

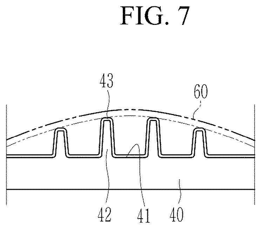

FIG. 6 is a partial top plan view of the crown roll of FIG. 5, and FIG. 7 is a cross-sectional view taken along line VII-VII of FIG. 5. Referring to FIGS. 5 to 7, the crown roll 40 is sequentially disposed in the circumferential direction of the roll and has peaks 42 and troughs 41 of a predetermined depth between the peaks 42. The troughs 41 and peaks 42 are repeatedly disposed along the width direction of the roll.

The shape of the crown roll 40 prevents the width-direction flow of the lamination tape 60. Further, the configuration of troughs 41 and peaks 42 minimize the contact area with the lamination tape 60, thereby reducing contact friction. That is, the peaks 42 are in contact with the lamination tape 60 and serve to support and guide the lamination tape 60. But the lamination tape 60 is not in contact with the trough 41 regions. Thus, friction between the crown roll 40 the lamination tape 60 is reduced.

Referring to FIG. 7, the crown roll 40 may further include a resin coating layer 43 on the peaks 42. In the coating process forming the resin coating layer 43, the resin coating layer 43 may be formed integrally with the peaks 42 and the troughs 41. The resin coating layer 43 disposed on the peaks 42 reduces the friction when guiding the move of the lamination tape 60 while supporting the lamination tape 60 as compared to the friction formed by direct contact between the peaks 42 and the lamination tape 60. That is, the resin coating layer 43 supports the lamination tape 60 reducing friction. In specific embodiments, the crown roll 40 includes a fluorine resin coating layer 43 on the peaks 42. The resin coating layer 43 may be formed of one of fluorinated ethylene propylene (FEP) and polyphenylene ether (PPE).

The total surface area of the peaks 42 in contact with the lamination tape 60 is about 30 to 60% of the total surface area of the crown roll 40. When the total surface area of the peaks 42 is less than 30% of the total surface area of the crown roll 40, a minimum stable friction is not achieved between the peaks 42 and the lamination tape 60 such that the lamination tape 60 may flow in the width direction, which may thereby cause wrinkles in the lamination tape 60 when it is applied to the electrode substrate. When the total surface area of the peaks 42 exceeds 70% of the total surface area of the crown roll 40, an excessive support force may be formed between the peaks 42 and the lamination tape 60, causing the lamination tape 60 to be subjected to excessive tension at a misaligned position in the width direction. Due to excessive tension, the width-direction position of the lamination tape 60 may not be corrected, which results in the formation of wrinkles in the lamination tape 60 when it is applied to the electrode substrate. When the total surface area of the peaks 42 is 30 to 60% of the total area of the crown roll 40, a stable friction is secured between the peaks 42 and the lamination tape 60, preventing width-wise flow of the lamination tape 60, and a stable support force is ensured, applying appropriate tension to the lamination tape 60, thus preventing the formation of wrinkles.

As such, in the first embodiment, while attaching the lamination tape 60 to the positive electrode substrate 51, even if the adhesion of the lamination tape 60 is greater than that of a general tape before heat fusion, the width-wise flow of the lamination tape 60 is minimized during feeding of the lamination tape 60, thus preventing the formation of wrinkles in the lamination tape 60.

Although not shown in the drawings, the resin coating layer may be formed on a crown roll that does not include troughs and peaks to reduce friction with the lamination tape. In this case, the coating layer may be sequentially formed along the circumferential direction of the roll, and the coating layer may have a predetermined width and gaps in the width direction of the roll. For example, a coating layer may be formed on portions of the crown roll that correspond to the peaks of the first embodiment and may not be formed portions corresponding to the troughs. Alternatively, a coating layer may be formed on portions of the crown roll that correspond to the troughs of the first embodiment and may not be formed on the portions corresponding to the peaks.

Hereinafter, various embodiments of the present disclosure will be described. In comparison with the first embodiment and other previously described embodiments, descriptions of the same configurations are omitted and descriptions of different configurations are described.

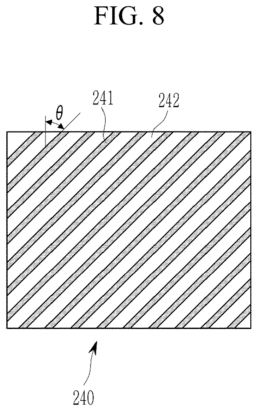

FIG. 8 is a partial top plan view of a crown roll used in a lamination tape feeding system for an electrode plate substrate according to a second embodiment of the present disclosure. Referring to FIG. 8, a crown roll 240 used in a lamination tape feeding system of the second embodiment has troughs 241 and peaks 242 that are sequentially disposed along a slope direction at a predetermined angle (θ) with respect to the circumferential direction of the roll. The troughs 241 and peaks 242 are repeatedly disposed along the width direction of the roll (left-right direction in FIG. 8).

The shape of the crown roll 240 prevents the width-direction flow of the lamination tape 60, and the troughs 241 and peaks 242 minimize the contact area with the lamination tape 60, thereby reducing contact friction. In this case, the troughs 241 and the peaks 242 provided an angle (8) come into contact while sequentially moving the contact position in the width direction (left-right direction in FIG. 8) of the moving lamination tape 60. That is, the peaks 242 are in contact with the lamination tape 60 and serve to support and guide the lamination tape 60. In this case, the troughs 241 do not make contact with the lamination tape 60, thereby reducing contact friction between the lamination tape 60 and the crown roll 240.

In this embodiment, the troughs 241 and the peaks 242, provided at the angle (8), are alternately in contact and out of contact with respect to the width direction of the moving lamination tape 60, alternating between positions where the peaks 242 make contact to support and guide the lamination tape 60, and there is reduced friction at the positions where the troughs 241 and the peaks 242 do not make contact with the lamination tape 60. Accordingly, it is possible to effectively prevent the width-direction flow of the lamination tape 60.

Although not shown in the drawings, friction with the lamination tape may be reduced by forming a coating layer on a crown roll without peaks and troughs that are inclined with respect to the circumferential direction of the roll. **In** such a case, the coating layer may be sequentially formed along the circumferential direction of the roll, and the coating may have a predetermined width and a predetermined gap in the width direction of the roll. For example, the crown roll may form a coating layer on portions corresponding to the peaks at an angle (θ) of the second embodiment and may not form a coating layer on portions corresponding to the troughs. Alternatively, the crown roll may have a coating layer formed on portions corresponding to the troughs at an angle (θ) of the second embodiment and may not have a coating layer formed on portions corresponding to the peaks.

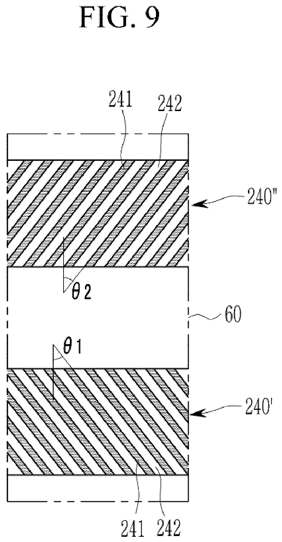

FIG. 9 is a top plan view showing the pattern of a first slope direction of a first slope roll and a second slope direction of a second slope roll when two crown rolls as shown in FIG. 8 are sequentially disposed as a first slope roll and a second slope roll. Referring to FIG. 9, the crown roll 240 includes a first slope roll 240' and a second slope roll 240" which are sequentially arranged in sections along the moving direction of the lamination tape 60.

The first slope roll 240' and the second slope roll 240" form a structure in which a first slope direction 81 of the second slope roll 240' and a second slope direction θ2 of the second slope roll 240" are symmetric with respect to the moving direction of the lamination tape 60. That is, the first slope roll 240' and the second slope roll 240" are formed symmetrical with respect to the first and second slope directions θ1 and θ2. Thus, the system may prevent a situation in which the width-direction flow of the lamination tape 60 may be biased to one side.

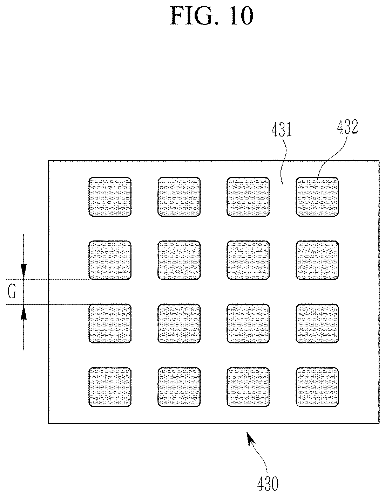

FIG. 10 is a partial top plan view of a crown roll used in a lamination tape feeding system for an electrode plate substrate according to a third embodiment of the present disclosure. Referring to FIG. 10, a crown roll 430 used in a lamination tape feeding system of the third embodiment has a plurality of protruding parts 432 that are intermittently spaced apart with a gap G along the circumferential direction of the roll, and having a bottom 431 at a distance from the tops of the protruding parts 432. The protruding parts 432 are repeatedly disposed along the width direction of the roll (left-right direction in FIG. 10).

The shape of the crown roll 430 prevents the width-direction flow of the lamination tape 60, and the configuration with the bottom 431 and protruding parts 432 minimizes the contact area with the lamination tape 60, thereby reducing contact friction. In this case, the protruding parts 432 with the gap Gs between the protruding parts 432 come into contact while intermittently moving their contact positions in the width direction (left-right direction in FIG. 10) of the moving lamination tape 60. That is, the protruding parts 432 are in contact with the lamination tape 60 and serve to support and guide the lamination tape 60. In this case, the bottom 431 does not make contact with the lamination tape 60, thereby reducing contact friction.

In this case, the protruding parts 432 and the gap G are intermittently in contact and out of contact with respect to the width direction of the moving lamination tape 60, alternating between positions where the protruding parts 432 make contact to support and guide, and positions of the gaps G where there is no contact to the lamination tape 60 to thereby reduce contact friction. Accordingly, it is possible to effectively prevent the width-direction flow of the lamination tape 60.

Although not shown in the drawings, a resin coating layer may be formed on a crown roll without the protruding parts to reduce friction with the lamination tape. In this case, parts of the coating layer may be intermittently spaced apart with gaps along the circumferential direction of the roll. For example, the crown roll may be formed with a coating layer on portions corresponding to the protruding parts of the third embodiment and may not have a coating layer formed on portions corresponding to the bottom. Alternatively, the crown roll may be formed with a coating layer on portions corresponding to the bottom and not have a coating layer formed on portions corresponding to the protruding parts.

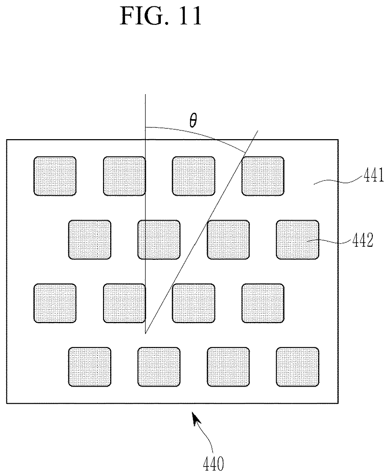

FIG. 11 is a partial top plan view of a crown roll used in a lamination tape feeding system for an electrode plate substrate according to the fourth embodiment of the present disclosure. Referring to FIG. 11, in a crown roll 440 used in the lamination tape feeding system of the fourth embodiment, protruding parts 442 are intermittently disposed along a slope direction at an angle (8) with respect to the circumferential direction of the roll 440.

The shape of the crown roll 440 prevents the width-direction flow of the lamination tape 60, and the configuration with a bottom 441 and the protruding parts 442 minimizes the contact area with the lamination tape 60, thereby reducing contact friction. In this case, the protruding parts 442 positioned at an angle (8) come into contact while sequentially moving the contact position in the width direction of the moving lamination tape 60. That is, the protruding parts 442 are in contact with the lamination tape 60 and serve to support and guide the lamination tape 60. In this case, the bottom 441 does not make contact with the lamination tape 60, thereby reducing contact friction.

The bottom 441 and the protruding parts 442 provided at the angle (θ) are alternately in contact and out of contact with respect to the width direction of the moving lamination tape 60, alternating between positions where the protruding parts 442 make contact to support and guide, and positions where the bottom 441 do not contact the lamination tape 60 to reduce contact friction. Accordingly, it is possible to effectively prevent the width-direction flow of the lamination tape 60.

Although not shown in the drawings, a resin coating layer may be intermittently formed along the slope direction with respect to the circumferential direction of the roll without protruding parts to reduce friction with the lamination tape. In this case, the coating layer may be repeatedly disposed with a predetermined width and gaps may be formed between parts of the coating layer in the width direction of the crown roll. For example, the crown roll may be formed with a coating layer on portions corresponding to protruding parts provided at the angle (θ) of the fourth embodiment, and may not have a coating layer formed on portions corresponding to a bottom. Conversely, the crown roll may be formed with a coating layer on a portion corresponding to the bottom provided at the angle (θ) of the fourth embodiment and may not have a coating layer formed on portions corresponding to the protruding parts.

While this disclosure has been described in connection with what is presently considered to be practical embodiments, it is to be understood that the disclosure is not limited to the disclosed embodiments. Rather, the disclosure covers various modifications and equivalent arrangements included within the scope of the disclosure.

Embodiments are set out in the following clauses.
Clause 1. A lamination tape feeding system for an electrode plate substrate, the lamination tape feeding system comprising:
   an input roll configured to input a lamination tape to be attached to an uncoated region of the electrode plate substrate to which an active material is applied;
   a plurality of guide rolls configured to guide the lamination tape;
   a discharge roll configured to discharge lamination tape; and
   at least one crown roll (i) disposed in a path of the lamination tape between the input roll and the discharge roll, (ii) disposed in the path between the guide rolls, and (iii) having a maximum height at the center of a width direction of the at least one crown roll that intersects the moving direction of the lamination tape along the path, with the height decreasing from the maximum height toward ends of the at least one crown roll.
Clause 2. The lamination tape feeding system according to clause 1, wherein the input roll is disposed to guide the lamination tape downward and then upward, and the discharge roll is disposed to horizontally guide the lamination tape.
Clause 3. The lamination tape feeding system according to clause 1 or clause 2, wherein a plurality of crown rolls are provided, and the guide rolls and the crown rolls alternately disposed in sections along the moving direction of the lamination tape.
Clause 4. The lamination tape feeding system according to clause 1 or clause 2, wherein a plurality of crown rolls are provided and sequentially disposed in the moving direction of the lamination tape.
Clause 5. The lamination tape feeding system according to clause 1 or clause 2, wherein a plurality of crown rolls are provided, to be alternately disposed with the guide rolls in some sections along the moving direction.
Clause 6. The lamination tape feeding system according to any one of clauses 1 to 5, wherein the at least one crown roll includes peaks and troughs along a circumferential direction of the at least one crown roll, and the peaks and troughs are repeatedly disposed along the width direction of the at least one roll.
Clause 7. The lamination tape feeding system according to clause 6, wherein the crown roll further comprises a resin coating layer on the peaks.
Clause 8. The lamination tape feeding system according to clause 6, wherein the crown roll further comprises a fluorine resin coating layer on the peaks.
Clause 9. The lamination tape feeding system according to clause 8, wherein the fluorine resin coating layer is formed of one of fluorinated ethylene propylene (FEP) and polyphenylene ether (PPE).
Clause 10. The lamination tape feeding system according to any one of clauses 6 to 9, wherein a total surface area of the peaks configured to contact the lamination tape is 30 to 60% of a total surface area of the at least on crown roll.
Clause 11. The lamination tape feeding system according to any one of clauses 1 to 5, wherein the at least one crown roll includes peaks and troughs that are sequentially disposed in a sloped direction with respect to a circumferential direction of the at least one crown roll, and the peaks and troughs are repeatedly disposed along the width direction of the at least one crown roll.
Clause 12. The lamination tape feeding system according to clause 11, wherein the at least one crown roll includes a first slope roll and a second slope roll that are sequentially arranged in the moving direction of the lamination tape, and a first slope direction of the first slope roll and a second slope direction of the second slope roll are symmetrical with respect to the moving direction of the lamination tape.
Clause 13. The lamination tape feeding system according to any one of clauses 1 to 5, wherein the at least one crown roll includes a plurality of protruding parts intermittently spaced along a circumferential direction of the at least one crown roll and a bottom spaced from the protruding parts, and the protruding parts are repeatedly disposed along the width direction of the at least one crown roll.
Clause 14. The lamination tape feeding system according to clause 13, wherein the protruding parts are intermittently disposed along a slope direction with respect to the circumferential direction of the at least one crown roll.
Clause 15. The lamination tape feeding system according to any one of clauses 1 to 5, wherein the at least one crown roll further comprises a resin coating layer on a surface of the at least one crown roll.
Clause 16. The lamination tape feeding system according to clause 15, wherein the coating layer is sequentially formed along a circumferential direction of the at least one crown roll, and the coating layer has a plurality of parts and gaps formed between the parts of the coating layer in the width direction of the at least one crown roll.
Clause 17. The lamination tape feeding system according to clause 15, wherein the coating layer is sequentially formed along a slope direction with respect to a circumferential direction of the at least one roll, and the coating layer has a plurality of parts and gaps formed between the parts of the coating layer in the width direction of the at least one crown roll.
Clause 18. The lamination tape feeding system according to clause 15, wherein the coating layer includes intermittently spaced parts along a circumferential direction of the roll, and the parts of the coating layer repeatedly disposed along the width direction of the at least one crown roll.
Clause 19. The lamination tape feeding system according to any one of clauses 13 to 15, wherein the coating layer includes intermittently spaced parts formed along a slope direction with respect to the circumferential direction of the at least one crown roll, and the intermittently spaced parts repeatedly disposed along the width direction of the at least one crown roll.

**<Description of symbols>**

| | | | |
|---|---|---|---|
| 10: | Input roll | 20: | Guide roll |
| 30: | Discharge roll | 40: | Crown roll |
| 41: | Valley | 42: | Mountain |
| 43: | Resin coating layer | 50: | Electrode assembly |
| 51: | Electrode plate (Positive electrode) substrate | | |
| 52: | Active material coating part | | |
| 53: | Uncoated region | 55: | Flat part |
| 56: | Curved part | 60: | Lamination tape |
| 240: | Crown roll | 240': | First slope roll |
| 240": | Second slope roll | 241: | Valley |
| 242: | Mountain | 340: | Crown roll |
| 341: | Bottom | 342: | Protruding part |
| 440: | Crown roll | 441: | Bottom |
| 442: | Protruding part | 8: | Angle |
| θ1: | First slope direction | θ2: | Second slope direction |
| G: | Gap | | |

## Claims

1. A lamination tape feeding system for an electrode plate substrate, the lamination tape feeding system comprising:
an input roll configured to input a lamination tape to be attached to an uncoated region of the electrode plate substrate to which an active material is applied;
a plurality of guide rolls configured to guide the lamination tape;
a discharge roll configured to discharge lamination tape; and
at least one crown roll (i) disposed in a path of the lamination tape between the input roll and the discharge roll, (ii) disposed in the path between the guide rolls, and (iii) having a maximum height at the center of a width direction of the at least one crown roll that intersects the moving direction of the lamination tape along the path, with the height decreasing from the maximum height toward ends of the at least one crown roll.

2. The lamination tape feeding system as claimed in claim 1, wherein the input roll is disposed to guide the lamination tape downward and then upward, and the discharge roll is disposed to horizontally guide the lamination tape.

3. The lamination tape feeding system as claimed in claim 1 or claim 2, wherein a plurality of crown rolls are provided, and the guide rolls and the crown rolls alternately disposed in sections along the moving direction of the lamination tape.

4. The lamination tape feeding system as claimed in claim 1 or claim 2, wherein a plurality of crown rolls are provided and sequentially disposed in the moving direction of the lamination tape.

5. The lamination tape feeding system as claimed in claim 1 or claim 2, wherein a plurality of crown rolls are provided, to be alternately disposed with the guide rolls in some sections along the moving direction.

6. The lamination tape feeding system as claimed in any one of claims 1 to 5, wherein the at least one crown roll includes peaks and troughs along a circumferential direction of the at least one crown roll, and the peaks and troughs are repeatedly disposed along the width direction of the at least one roll.

7. The lamination tape feeding system as claimed in claim 6, wherein the crown roll further comprises a resin coating layer on the peaks.

8. The lamination tape feeding system as claimed in claim 6, wherein the crown roll further comprises a fluorine resin coating layer on the peaks, optionally wherein the fluorine resin coating layer is formed of one of fluorinated ethylene propylene (FEP) and polyphenylene ether (PPE).

9. The lamination tape feeding system as claimed in any one of claims 6 to 8, wherein a total surface area of the peaks configured to contact the lamination tape is 30 to 60% of a total surface area of the at least on crown roll.

10. The lamination tape feeding system as claimed in any one of claims 1 to 5, wherein the at least one crown roll includes peaks and troughs that are sequentially disposed in a sloped direction with respect to a circumferential direction of the at least one crown roll, and the peaks and troughs are repeatedly disposed along the width direction of the at least one crown roll, optionally wherein the at least one crown roll includes a first slope roll and a second slope roll that are sequentially arranged in the moving direction of the lamination tape, and a first slope direction of the first slope roll and a second slope direction of the second slope roll are symmetrical with respect to the moving direction of the lamination tape.

11. The lamination tape feeding system as claimed in any one of claims 1 to 5, wherein the at least one crown roll includes a plurality of protruding parts intermittently spaced along a circumferential direction of the at least one crown roll and a bottom spaced from the protruding parts, and the protruding parts are repeatedly disposed along the width direction of the at least one crown roll.

12. The lamination tape feeding system as claimed in claim 11, wherein the protruding parts are intermittently disposed along a slope direction with respect to the circumferential direction of the at least one crown roll.

13. The lamination tape feeding system of as claimed in any one of claims 1 to 5, wherein the at least one crown roll further comprises a resin coating layer on a surface of the at least one crown roll.

14. The lamination tape feeding system as claimed in claim 13, wherein:
(i) the coating layer is sequentially formed along a circumferential direction of the at least one crown roll, and the coating layer has a plurality of parts and gaps formed between the parts of the coating layer in the width direction of the at least one crown roll; or
(ii) the coating layer is sequentially formed along a slope direction with respect to a circumferential direction of the at least one roll, and the coating layer has a plurality of parts and gaps formed between the parts of the coating layer in the width direction of the at least one crown roll; or
(iii) the coating layer includes intermittently spaced parts along a circumferential direction of the roll, and the parts of the coating layer repeatedly disposed along the width direction of the at least one crown roll.

15. The lamination tape feeding system as claimed in claim 13, wherein the coating layer includes intermittently spaced parts formed along a slope direction with respect to the circumferential direction of the at least one crown roll, and the intermittently spaced parts repeatedly disposed along the width direction of the at least one crown roll.
